# EUROPEAN PATENT APPLICATION

(11) **EP 4 664 379 A1**
(43) Date of publication of application: **17.12.2025**
(21) Application number: 25175257.2
(22) Date of filing: 09.05.2025
(51) Int. Cl.: G06Q 30/06, H04L 47/125, H04L 67/60

(54) **AUTOMATIC DETECTION AND MANAGEMENT OF ITEM DEMAND**

(30) Priority: 11.06.2024 US 202418739655
(71) Applicant: eBay Inc., San Jose, CA 95125 (US)
(72) Inventor: HULAGU, Cengiz, San Jose, 95125 (US); MA, Yuchu, San Jose, 95125 (US); PATHURI, Vaishampayan Reddy, San Jose, 95125 (US); PAUL, Kishore, San Jose, 95125 (US)
(74) Representative: Müller-Boré & Partner Patentanwälte PartG mbB

(57) **Abstract**

Item request management employing secure hashes to queue item requests for processing is leveraged with an online platform supporting item listings. In one or more implementations, item request data associated with an item request for a listed item is received. The item request data includes information such as a recipient for the item and/or an item procurement quantity associated with the item request. A secure hash is generated from the item request data, with the secure hash storable in a secure hash ring to represent the item request data in the secure hash ring. A queued item request is generated in an item request processing queue from the secure hash, and the queued item request is processed to allocate an amount of the item equal to the procurement quantity to the recipient.

## Description

### BACKGROUND

Platforms that support item listings, such as electronic commerce platforms, can experience different amounts of network traffic during different conditions. In some situations, item listings describing highly desirable items can result in unexpectedly high amounts of network traffic, typically referred to as traffic spikes. For example, traffic spikes may be associated with the release of items via the platform such as limited-edition collectible items, time-sensitive items, and so forth.

### SUMMARY

Item request management employing secure hashes to queue item requests for processing is leveraged with an online platform supporting item listings. In one or more implementations, item request data associated with an item request for a listed item is received. The item request data includes information such as a recipient for the item and/or an item procurement quantity associated with the item request. A secure hash is generated from the item request data, with the secure hash is storable in a secure hash ring to represent the item request data in the secure hash ring. A queued item request is generated in an item request processing queue from the secure hash, and the queued item request is processed to allocate an amount of the item equal to the procurement quantity to the recipient.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures.
FIG. 1 is an illustration of an environment in an example implementation that is operable to employ techniques described herein.
FIG. 2 depicts an example implementation showing a secure hash module employing secure hashes for item request management.
FIG. 3 depicts another example implementation showing management of item requests using secure hashes.
FIG. 4 depicts an example implementation showing a secure hash ring employed for item request management.
FIG. 5 depicts an example implementation showing replicas of nodes of a secure hash ring.
FIG. 6 shows a flow diagram depicting a procedure in an example implementation which includes using a secure hash for item request management.
FIG. 7 illustrates an example system that includes an example computing device that is representative of one or more computing systems and/or devices for implementing the various techniques described herein.

### DETAILED DESCRIPTION

### Overview

Service provider systems implement platforms supporting item listings, such as electronic commerce platforms. Item listings implemented by such platforms are accessible over a network, such as the internet, for browsing. Items described by item listings of a platform are available for acquisition through use of item requests communicated to the platform. Such item requests may be input via a graphical user interface (GUI) implemented by the platform, where the GUI is accessible to external computing devices.

Although typically network traffic associated with browsing and interaction of item listings does not fluctuate abruptly, in some situations a high demand for particular items can result in traffic spikes. For example, some items described by item listings can include collectibles, sneakers, antiques, items manufactured in limited quantity, special edition items, rarities, or other items that are otherwise not permanently or frequently accessible for acquisition. Events such as flash offerings for such items can result in unpredictable network traffic conditions. Flash offerings are events in which item requesters (e.g., users of the platform) compete with each other to quickly purchase a particular item associated with an item listing. In some situations, flash offerings can be initiated without prior notice to item requesters. In other situations, flash offerings are planned and scheduled for a particular time and date, and the time and date information is available to item requesters prior to initialization of the flash offerings.

Traffic spikes associated with flash offerings and other high traffic events can result in performance degradation of systems implementing such platforms. For example, flash offerings can result in large numbers of users (e.g., thousands of users, tens of thousands of users, hundreds of thousands of users, etc.) accessing a single item listing within a short amount of time (e.g., within one minute following initialization of a flash offering).

Item listings involved in flash offerings typically describe a single item (e.g., a particular model of a collectible figurine, a ticket for a performance, a particular video game title, etc.), with multiple instances of the item available for acquisition. For example, an item listing describing a sneaker involved in a flash offering may specify a brand, colorway, and model of the sneaker, as well as a number of instances of the sneaker that are available for acquisition (e.g., one hundred instances, one thousand instances, ten thousand instances, etc.). The number of instances of an item available for acquisition may be referred to as an availability of the item (e.g., "item availability," or "available quantity" of the item). The item described by the item listing may be associated with a single item identification (e.g., "item ID"). In some implementations, the item identification includes a sequence of letters and/or integers, with the sequence associated with the item being particular to that item and not associated with other items.

During a flash offering, an available quantity of an item involved in the flash offering may be less than a number of users attempting to acquire the item. For example, an available quantity of an item may be one hundred instances of the item, while a number of users navigating to the associated item listing to attempt to acquire one or more instances of the item may be much larger (e.g., ten thousand users or more). The increased traffic resulting from flash offerings is in addition to normal network traffic experienced by the platform (e.g., traffic regularly occurring during conditions in which flash offerings are not present). As platforms can support vast numbers of item listings (e.g., millions or billions of item listings), network traffic can place a significant computational load on systems implementing the platforms even during conditions in which flash offerings are not occurring. Thus, traffic spikes such as those occurring during flash offerings can result in performance degradation. For example, systems implementing the platforms may struggle to handle the increased computational load resulting from increased numbers of item requests occurring within a small amount of time. The increased navigation to item listings involved in flash offerings may additionally increase the computational load. Such performance degradation can include unexpected shutdowns of systems implementing the platforms, increased latency, or other undesired operation.

Conventional approaches to managing traffic spikes are typically expensive, ineffective, or both. For example, some conventional approaches utilize a locker system. Such locker systems attempt to process item requests immediately and sequentially as the item requests are received. In a scenario of operation of a locker system, the locker system receives a first item request for an item associated with an item listing before receiving a second item request for the item. Responsive to receiving the first item request, the locker system places the first item request in a processing queue and locks the processing of the second item request until the first item request has been fully processed. In this configuration, the item requester associated with the first item request has exclusive access to the inventory of the item until a decrement is performed. Following completion of the processing of the first item request, the available quantity of the item maintained by the item listing is decremented by an amount specified by the first item request. However, while the locking and decrementing are in progress, item requests from other item requesters can continue to accrue and deplete system resources.

Such configurations can result in a large amount of unprocessed locked item requests. Maintaining the large amount of unprocessed locked item requests in memory and/or other storage results in substantial computational burden on the system and can result in performance degradation such as latency, dropped item requests, system shutdowns, etc. Additionally, users navigating item listings during such conditions may experience longer wait times associated with placing item requests and longer wait times associated with loading item listings to external devices, which can lead to user frustration. Longer wait times often cause users to reload item listings (e.g., refresh webpages or applications displaying item listings), and the reloading can further increase the network traffic to the system and intensify performance degradation.

Such performance degradation can also be observed during navigation to item listings and placement of item requests associated with item listings that are not related to the flash offerings (e.g., a "global" system slowdown can occur that affects all of the item listings implemented by the system). During situations in which item requests are dropped (e.g., placement of item requests is attempted but the item requests are not recorded due to excessive latency of the system), the above-described performance degradation can delay reporting of the dropped item requests. For example, a user may believe that a request for an item has been successfully placed, but the user may not receive a notice or alert from the platform that the item request was unsuccessful until much later (e.g., three hours later) and thus the user may miss the opportunity to acquire the item during the flash offering.

Such approaches can also result in disproportionate computational load on the system during different stages of management of item requests. For example, immediately following initiation of a flash offering, a computational load on the system resulting from users navigating to the item listing associated with the flash offering may be much higher than a computational load on the system resulting from processing item requests. The computational load associated with navigation to the item listing may exhaust resources of the system (e.g., databases, memory, etc.) reserved specifically for supporting the navigation. As the flash offering progresses, other resources of the system reserved for other operations such as processing item requests may also be exhausted as item requests are placed. Thus, it can be difficult to ensure sufficient resources are available at each stage of management of item requests to avoid overwhelming such systems. As a result, such systems sometimes set a limit on an amount of instances of a listed item available for acquisition. For example, a maximum availability of an item may be set to five hundred instances of the item to attempt to mitigate some of the above-described issues associated with traffic spikes. However, this approach is often not practical for high-demand items that would otherwise be available in larger quantities, such as two thousand instances, five thousand instances, etc.

Other conventional approaches that attempt to address these challenges utilize horizontal scaling of a system to increase a computational power of the system. For example, a system implementing a platform supporting item listings may be a distributed computing system including multiple computing devices (e.g., hundreds or thousands of computing devices). Horizontal scaling includes increasing a computational capacity of the system by increasing a number of the computing devices included by the system (e.g., doubling an amount of computing devices included and/or utilized by the system) and/or increasing a computational capacity of one or more of the computing devices. As one example, horizontal scaling may include hardware modifications such as increasing an amount of memory included by the computing devices, increasing a number of central processing unit (CPU) cores included by the computing devices, etc. Alternatively or additionally, horizontal scaling may involve increasing an amount of resources used from a cloud- or web- services platform.

However, such approaches can be costly and wasteful. For example, increasing a computational capacity of a system via horizontal scaling in order to accommodate the computational demands that occur during traffic spikes results in a system configuration that is excessively robust for normal traffic conditions. Thus, during operation of such systems while traffic spikes are not occurring, system resources can often sit idle and contribute little value. As one example, horizontally scaling a system including one-thousand computing devices to prepare for traffic spikes may include increasing the number of computing devices to ten-thousand, which greatly increases the cost of the system and does not markedly increase system performance during normal traffic conditions (e.g., conditions without traffic spikes).

To address the above-described technical challenges, the techniques described herein employ secure hashes to quickly record item requests and hold the item requests for processing. According to the described techniques, a secure hash is generated for each item request. The secure hash is generated using item request data associated with the item request, such as a user identification, item identification, and item procurement quantity.

Secure hashes are encoded using a secure hash algorithm. In some implementations, the secure hash algorithm is a cryptographic hash algorithm such as a SHA-1 or SHA-2 algorithm. The secure hash algorithm receives the item request data as input and generates a secure hash from the item request data as output.

Although the secure hashes described herein are generated using a secure hash algorithm, the secure hash algorithm is utilized in order to ensure that collisions between the secure hashes do not occur. To do so, the secure hash algorithm utilizes a randomization property that causes a likelihood of collision of the secure hashes to tend toward zero. Each secure hash is distinct from each other secure hash due to the randomization property utilized by the secure hash algorithm. For example, each secure hash includes sequences of letters and numbers that are generated from the corresponding item request data, but the sequence of letters and numbers of each secure hash is different from the sequence of each other secure hash. Therefore, while the secure hash algorithm will reliably and repeatedly generate a same secure hash having a same sequence of letters and numbers when particular item request data is provided as input to the secure hash algorithm, the same secure hash will not be generated when different item request data is provided as input.

In an example, item request data associated with a first item request for an item described by an item listing is used to generate a first secure hash, and item request data associated with a second item request for the item is used to generate a second secure hash. The sequences included by the first secure hash and the second secure hash, however, are not similar even if the item request data differs by as little as one character, such as due to different users requesting the item or due to requesting the item at different times. Thus, for each secure hash generated, the secure hash is uniquely associated with a single respective item request having respective item request data. The secure hash algorithm is computationally very fast such that a secure hash is generated immediately from item request data responsive to providing the item request data as input to the secure hash algorithm.

The secure hashes are stored using a secure hash ring in at least one implementation. In some instances, the secure hash ring is a sharded random hash ring. The secure hashes are included as nodes in the secure hash ring such that each node in the secure hash ring represents an item request associated with an item, and the item requests are maintained separately from each other. The secure hash ring is expandable to accommodate the number of item requests received. For example, the secure hash ring is expandable to store ten thousand nodes, fifty thousand nodes, etc.

In an example operation, a large number of item requests (e.g., ten thousand item requests) occur during a flash offering associated with an item listing. A respective secure hash is generated for each item request, and the secure hashes represent the item requests in the secure hash ring. The availability of the item described by the item listing is decremented responsive to generation of each secure hash until the available quantity reaches zero. Once the available quantity reaches zero, the item listing is updated to indicate that the item is no longer available.

Although the secure hashes are generated and stored immediately responsive to item requests and the secure hashes are used to represent the item requests in the secure hash ring, the item requests are not necessarily processed at the time of generation of the secure hashes. Instead, the secure hashes are used to place the item requests in an item request processing queue. Queued item requests within the processing queue are processed separately from the generation of the secure hashes.

In this way, the secure hashes are employed to quickly and reliably track item availability associated with an item listing and to record large amounts of item requests within a short amount of time, with these operations being decoupled from the final processing of the item requests from the processing queue. Indeed, the item requests within the processing queue can be processed at a later time in order to reduce a computational load on the system implementing the platform that includes the item listing while traffic spikes are occurring. A technical effect of the described techniques is to increase performance of systems implementing the platform during high traffic conditions. For example, employing secure hashes for management of item requests according to the techniques described herein enables multiple flash offerings or other high traffic events involving a platform to occur concurrently without exceeding a computational load capacity of systems implementing the platform. Supporting concurrent high traffic events would otherwise be difficult or impossible using conventional approaches.

In some implementations, a likelihood of occurrence of a traffic spike associated with a particular item listing is automatically detected in accordance with the described techniques. For example, because the secure hashes are utilized to more quickly and accurately track item requests, the amount of secure hashes generated can be used as a metric to determine whether a traffic spike is imminent. In some examples, the secure hashes are used with a probabilistic data structure such as a count-min sketch to determine whether a traffic spike is about to occur. By automatically detecting whether a traffic spike is likely, various operations can be performed ahead of the traffic spike to reduce a likelihood of performance degradation of the system implementing the platform that includes the item listing.

As one example operation that may be performed responsive to detection that a traffic spike is likely to occur, a delay associated with the processing queue can be adjusted to reduce a computational burden associated with processing item requests from the processing queue. The delay, also referred to herein as a processing delay, queue delay, and/or processing queue delay, may be automatically determined (e.g., without human intervention) based on parameters such as a magnitude of the traffic spike and/or an item availability associated with an item listing.

In an example in which a traffic spike is detected in association with a particular item listing, the processing delay may be automatically set to a higher amount for higher item availability amounts or a lower amount for lower item availability amounts. Higher item availability amounts may be associated with a higher total number of item requests to be processed once a flash offering has concluded. Increasing the processing delay when the item availability is higher results in the technical effect of decreasing a likelihood of exhaustion of computational resources used for processing the item requests.

Additionally, adjusting the processing delay may protect systems downstream of the processing queue, such as one or more external transaction or delivery systems, from being overwhelmed by a large amount of network traffic within a short amount of time. This may increase a reliability of the platform to successfully communicate processed item requests to external systems without latency or other undesired conditions.

In the following discussion, an exemplary environment is first described that may employ the techniques described herein. Examples of implementation details and procedures are then described which may be performed in the exemplary environment as well as other environments. Performance of the exemplary procedures is not limited to the exemplary environment and the exemplary environment is not limited to performance of the exemplary procedures.

### Example of an Environment

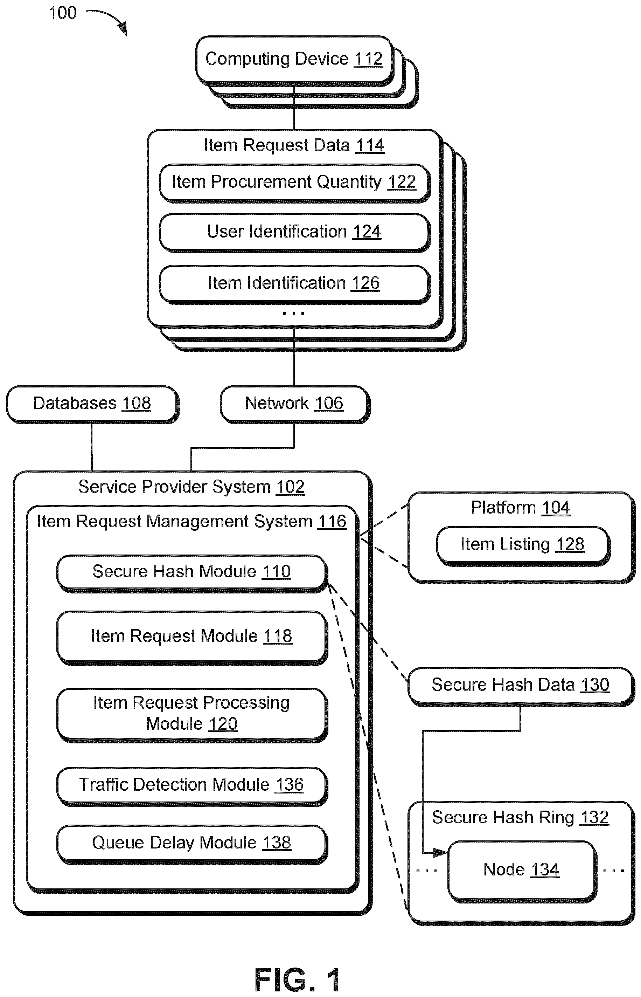

FIG. 1 is an illustration of an environment 100 in an example implementation that is operable to employ techniques described herein. In the depicted environment 100, a service provider system 102 implements a platform 104. The platform 104 includes item listings browsable by users. For example, the item listings are viewable at devices external to the service provider system 102 through communication with the service provider system 102 over a network 106. In some implementations, the item listings are implemented by the platform 104 as separate webpages (e.g., each item listing may be viewed as a webpage that is separate from other item listings) and/or sections of a digital application (e.g., an application for a smartphone, tablet, personal computer, etc.).

Some of the item listings may represent multiple instances of a same item. For example, an item listing may specify an availability of a described item, and the availability may be a number of instances of the item greater than one (e.g., ten instances of the item available for acquisition, fifty instances, one-thousand instances, etc.). Users of the platform 104 navigating to a given item listing are able to input a requested quantity (also referred to herein as a procurement quantity) of the item for acquisition.

For example, an item listing may specify an item availability indicating that one hundred instances of the item available are available for acquisition. In this example, a user inputting an item request may specify a procurement quantity associated with the request that is an amount between one and one hundred instances of the item. In some situations, the platform 104 may set a maximum procurement quantity associated with each item request (e.g., a maximum of five instances of the item available per item request).

Some item listings may be scheduled for publication by the platform 104, and the items described by such item listings may be unavailable for acquisition prior to the publication of the item listings. For example, an item listing describing a collectible figurine may have an available quantity equal to one-thousand instances of the figurine, and the item listing may additionally specify a scheduled publication time and date. In some implementations, prior to the scheduled publication time and date, the item listing may be viewable. However, initiation of item requests for the item described by the item listing may be locked prior to the publication of the item listing and may be unlocked via the publication. In alterative implementations, the item listing may not be viewable until the scheduled publication time and date. At the scheduled publication time, the item listing becomes searchable and viewable to users using the platform 104. The scheduling information may be stored as scheduling data associated with the item listing by one or more databases 108.

The databases 108 store data related to item listings and user accounts on the platform 104. Such data can include identification of users (e.g., usernames). Some item listings may be published by users, e.g., with the users being providers of the items described by item listings. Users may also input item requests via the platform 104 to acquire items described by item listings. Data stored by the databases 108 can also include item listing data, item scheduling data, etc. In some implementations, the databases 108 are operable to store data related to operation of a secure hash module 110, such as secure hashes and secure hash rings as described further below.

The service provider system 102 supports electronic communication between the service provider system 102 and one or more external computing devices over the network 106. An external computing device refers to a computing device remote from the service provider system 102 (e.g., not directly coupled to the service provider system 102). External computing devices may include user devices such as personal computers, smartphones, tablets, etc. In some implementations, the network 106 is the internet.

The service provider system 102 is operable to receive multiple item requests concurrently. For example, multiple different external computing devices may communicate with the service provider system 102 concurrently over the network 106, and each external computing device may communicate a separate item request to the service provider system 102.

Such external computing devices communicate item requests to the service provider system 102 using a user interface implemented by the service provider system 102 via the platform 104. For example, a computing device 112 communicates an item request to the service provider system 102. Communicating the item request includes transmitting item request data 114 over the network 106. In some implementations, at least a portion of the item request data is generated by the service provider system 102 responsive to receiving the communicated item request from the computing device 112.

Item requests received by the service provider system 102 are managed via an item request management system 116. The item request management system 116 manages item request placement (e.g., input), queuing, and processing. For example, the item request management system 116 receives item request data generated by external computing devices and performs various actions using the item request data to fulfill item requests associated with the item request data.

The item request management system 116 includes an item request module 118 and an item request processing module 120 each in electronic communication with other modules of the item request management system 116. For example, the item request module 118 and the item request processing module 120 are in electronic communication with the secure hash module 110. The item request module 118 receives the item request data 114 and communicates an item request based on the item request data 114 to the secure hash module 110.

In the implementation shown, the item request data 114 includes information describing an item procurement quantity 122 specifying an amount (e.g., number of instances) of the item to be acquired, a user identification 124 associated with the user placing the item request (e.g., a username or profile associated with the user on the platform 104), and an item identification 126 associated with the item of the item listing. A user inputting an item request for an item may also be referred to herein as a recipient of the item.

The item request processing module 120 receives item requests based on item request data and processes the item requests to provide (e.g., allocate) items to recipients. Processing the item requests includes, for example, finalizing transaction information associated with the item requests for input to one or more transaction services (e.g., payment processing services implemented by systems external to the item request management system 116), adjusting a status of the item requests as recorded by the item request management system 116 (e.g., changing a status of an item request from "in progress" to "ready to ship"), etc. In some examples, the item request processing module 120 may provide a notification (e.g., an email or other alert) to a recipient associated with an item request that the status of the item request has been updated and/or that the transaction associated with the item request has been completed.

The secure hash module 110 is in electronic communication with the item request module 118 and is employed by the item request management system 116 to manage item requests associated with item listings of the platform 104, such as an item listing 128. Managing the item requests includes, for example, controlling an available quantity (e.g., inventory) of an item described by an item listing. For example, controlling the available quantity of the item described by the item listing 128 includes, for example, adjusting the available quantity specified by the item listing 128 based on a number of item requests received for the item and a procurement quantity specified by each of the item requests.

The secure hash module 110 employs secure hashes, such as a secure hash described by secure hash data 130, to record and track item requests. The recorded item requests are based on item request data received from computing devices external to the service provider system 102. In some implementations as described further below, the secure hashes are represented within a secure hash ring 132 by nodes of the secure hash ring 132. Each secure hash represents an individual item request for an item and item request data that describes parameters of the item request. For example, the item listing 128 may be associated with the secure hash ring 132 that includes a node 134 representing an individual item request for the item described by the item listing 128.

In some implementations, the item request management system 116 further includes a traffic detection module 136 configured to determine whether a high traffic condition is present and/or imminent. A high traffic condition refers to a situation in which traffic to the service provider system 102 over the network 106 is above a threshold traffic amount within a pre-determined amount of time. The threshold traffic amount may be based on a configuration of the service provider system 102 (e.g., a computational capacity of the service provider system 102). As one non-limiting example, the threshold traffic may be an amount of traffic resulting in 80% consumption of resources (e.g., memory) of the service provider system 102.

Flash offerings can often result in a high traffic condition due to an increased amount of users accessing (e.g., viewing) a particular item listing within a short amount of time. A flash offering for a collectible item, for instance, can result in tens of thousands of views of a listing of the item within the first minute that the listing is published. In some examples, the threshold amount may be five thousand views for a particular item listing in one minute. In other examples, the threshold amount may be ten thousand views for a particular item listing in one minute, or a different amount based on a computational load capacity of the service provider system 102.

The traffic detection module 136 determines network traffic associated with individual item listings (e.g., item listings associated with flash offerings). In some examples, the traffic detection module 136 determines the traffic in real-time based on a detected frequency or rate of electronic communications received by the service provider system 102 from external computing devices. However, in some examples, the traffic detection module 136 employs a predictive approach and determines whether a high traffic condition is likely imminent according to detected conditions of the service provider system 102. In one example, the traffic detection module 136 uses a count-min sketch probabilistic data structure to determine whether a high traffic condition is likely or present. Based on the result of the determination, the item request management system 116 may initialize or otherwise employ the secure hash module 110 to record item requests associated with an item listing that is experiencing or resulting in the high traffic condition. Recording the item requests may include, for example, forming a secure hash ring associated with the item listing responsive to the determined network traffic. In some implementations, the secure hash module 110 forms the secure hash ring responsive to the network traffic determined by the traffic detection module 136 being greater than the threshold traffic amount.

The item request management system 116 further includes a queue delay module 138. The queue delay module 138 is employed by the item request management system 116 to adjust a queue delay associated with processing of item requests represented by secure hashes generated by the secure hash module 110. For example, the queue delay module 138 may increase or decrease an amount of time between processing of item requests by the item request processing module 120 and/or an amount of time between receiving secure hashes at the item request processing module 120. The queue delay module 138 controls a speed (e.g., timing) of the processing of item requests (e.g., queued item requests) in the processing queue (e.g., by controlling the speed of receiving the secure hashes at the item request processing module 120), and the speed of the processing can be controlled to be different than a speed of generating secure hashes from item request data. In some implementations, a queue delay specified by the queue delay module 138 is manually input or selected. For example, each item listing supported by the service provider system 102 may include a respective queue delay defined by the queue delay module 138.

In some implementations, the queue delay module 138 automatically specifies the queue delay for a given item listing based on an output of the traffic detection module 136. As one example, the traffic detection module 136 determines that a high traffic condition associated with the item listing 128 is present or imminent. As a result of the determination, the queue delay module 138 increases a queue delay associated with the item listing 128. The increased queue delay may decrease a likelihood of performance degradation of the service provider system 102 that can otherwise result from processing item requests associated with the item listing 128 with a lower queue delay.

By way of example, the traffic detection module 136 determines an amount of network traffic associated with the item listing 128. Based on the determined amount of network traffic, the queue delay module 138 adjusts a processing delay associated with the item request processing module 120 to increase or decrease a rate of processing of item requests by the item request processing module 120. Higher processing delays specified by the queue delay module 138 result in a lower rate of processing of item requests by the item request processing module 120 (e.g., fewer queued item requests generated or processed per second), while lower processing delays specified by the queue delay module 138 result in a higher rate of processing of item requests by the item request processing module 120. Processing delays may be specified as amounts of time (e.g., durations such as one second, half of one second, two seconds, etc.).

As described above, the secure hash module 110 is operable to form a secure hash ring associated with an item listing. In some implementations, controlling the processing delay via the queue delay module 138 is based on a size of the hash ring. For example, during conditions in which a size of the secure hash ring is larger (e.g., conditions in which the secure hash ring includes a large number of secure hashes resulting from a large number of item requests), the queue delay module 138 may increase the processing delay. As a result, a computational load on the service provider system 102 associated with processing item requests via the item request processing module 120 may be reduced. However, during conditions in which a size of the secure hash ring is smaller, the queue delay module 138 may decrease the processing delay. As a result, item requests may be processed by the item request processing module 120 at a faster rate (e.g., a higher number of queued item requests generated or processed per second), which may more quickly free resources of the service provider system 102 to be utilized for other tasks (e.g., processing item requests associated with a different item listing).

Having considered an example of an environment, consider now a discussion of some example details of the item request management system 116 with one or more implementations.

### Automatic Detection and Management of Item Demand

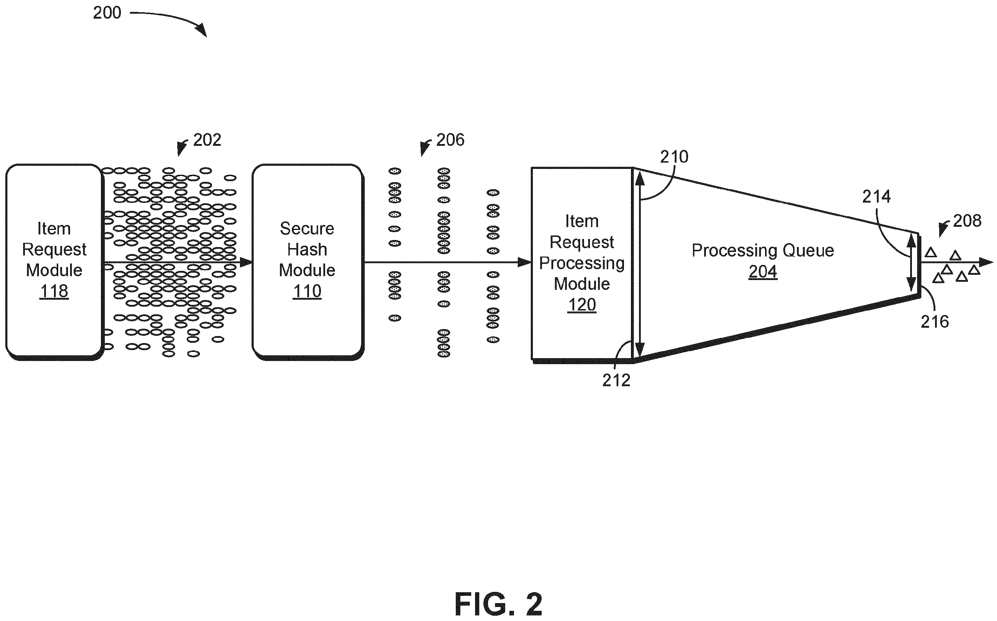

FIG. 2 depicts an example 200 showing item request management using the secure hash module 110. In the implementation shown, the secure hash module 110 receives item request data associated with item requests for an item described by an item listing. Each ellipse at the left-hand side of the secure hash module 110 shown in FIG. 2 represents an item request and the item request data associated with the item request. Item request data associated with a plurality of item requests 202 is shown being provided as input to the secure hash module 110 from the item request module 118.

The secure hash module 110 receives the item request data associated with the item requests and generates secure hashes from the item request data. By way of example, the secure hash module 110 is configured to generate a secure hash from the item request data 114. The secure hashes are stored by the secure hash module 110 (e.g., via communication with the databases 108) for consumption by the item request processing module 120.

For example, the secure hashes are stored using a secure hash ring as described above, with the secure hashes representing item request data in the secure hash ring. The secure hashes are provided by the secure hash module 110 to the item request processing module 120, where the item requests are identified using the secure hashes and are placed in a processing queue 204. In FIG. 2, a plurality of secure hashes 206 communicated from the secure hash module 110 to the item request processing module 120 is depicted, with the secure hashes represented by ellipses including stipple shading. As depicted, the secure hash module 110 may receive item requests at a high rate (e.g., thousands per second) and generates a secure hash for each of the received item requests. The secure hashes may be provided from the secure hash module 110 to the item request processing module 120 at a lower rate (e.g., one hundred per second). In some implementations, the item request processing module 120 communicates with the secure hash module 110 to acquire the secure hashes (e.g., the secure hashes are provided to the item request processing module 120 responsive to communications received by the secure hash module 110 from the item request processing module 120).

The item request processing module 120 generates queued item requests in the processing queue 204 based on the secure hashes received by the item request processing module 120, and the queued item requests are processed by the item request processing module 120 from the processing queue 204. A plurality of processed item requests 208 are depicted in FIG. 2 by triangles. A rate of input of item request data to the secure hash module 110 and a rate of generation of secure hashes by the secure hash module 110 may be different than a rate of output of processed item requests from the processing queue 204 of the item request processing module 120. Specifically, the rate of generating queued item requests in the processing queue 204 and processing the queued item requests from the processing queue 204 may be much lower than the rate of receiving the item requests at the secure hash module 110. This may reduce a computational load on the service provider system 102 associated with processing the item requests.

The depiction shown by FIG. 2 is representative of a moment during operation of the secure hash module 110, the item request module 118, and the item request processing module 120. At the depicted moment, a larger number of item requests are input to the secure hash module 110 (e.g., at the left-hand side of the secure hash module 110) compared to the number of processed item requests that are output from the processing queue 204 (e.g., at the right-hand side of the processing queue 204).

The different rates described above are represented in part in FIG. 2 by the tapered shape of the processing queue 204. The processing queue 204 is shown having a first width 210 at an input end 212 toward the secure hash module 110 and a second width 214 at an output end 216 (opposite to the input end). The first width 210 is larger than the second width 214. The tapered shape of the secure hash module 110 indicates that secure hashes are provided to the item request processing module 120 to place item requests in the processing queue 204 at a rate that is much larger than a rate of outputting processed item requests from the processing queue 204.

As one non-limiting example, thirty-thousand item requests per second may be input to the secure hash module 110, while one hundred processed item requests per second may be output by the item request processing module 120 from the processing queue 204. The lower rate of output of processed item requests from the processing queue 204 may be controlled by the item request management system 116 via the queue delay module 138 described above. For example, the queue delay module 138 may adjust the rate at which secure hashes are provided from the secure hash module 110 to the item request processing module 120 to adjust the rate at which processed item requests are output from the processing queue 204. By storing item request data associated with item requests as secure hashes and controlling the rate of providing the secure hashes to the item request processing module 120, performance of the service provider system 102 is increased relative to conventional approaches.

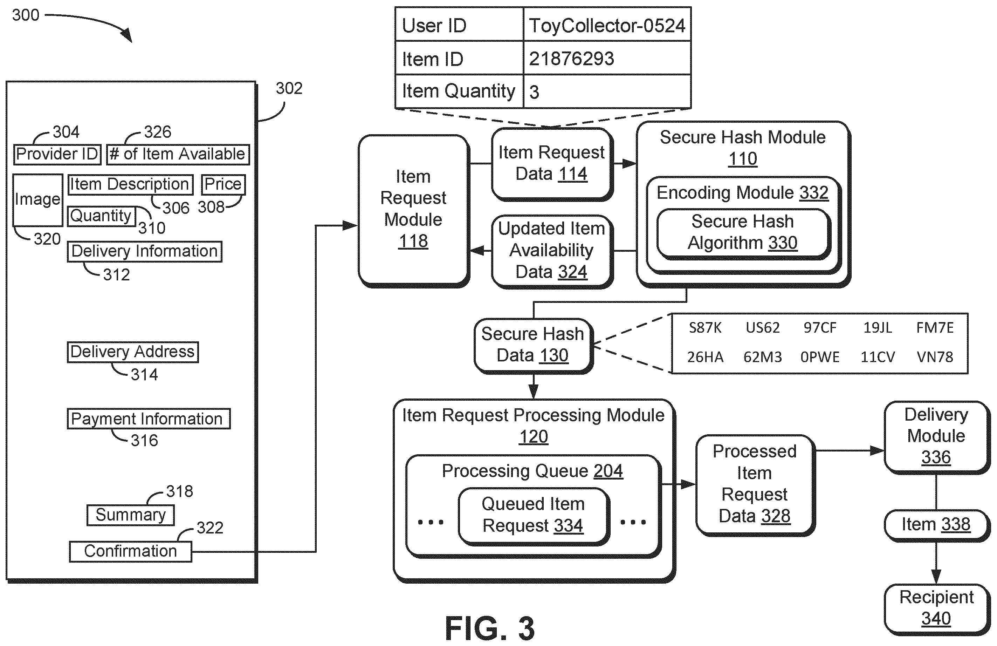

FIG. 3 depicts an example 300 showing management of item requests using secure hashes. A graphical user interface (GUI) 302 implemented by the item request module 118 of the item request management system 116 of the service provider system 102 for item request placement is shown. The GUI 302 may be displayed by external computing devices, such as the computing device 112, and may be accessible to the external computing devices over the network 106. For example, the GUI 302 may be implemented as a web page or digital application that supports electronic communication between the external computing devices and the service provider system 102 over the network 106. Users may interact with various elements of the GUI 302 to place item requests for items associated with item listings implemented by the platform 104 of the service provider system 102.

The GUI 302 is shown including elements such as data fields that are employed to receive and/or display information describing an item request. In particular, the GUI 302 is shown including an item provider identification field 304, an item description field 306, a price field 308, an item procurement quantity field 310, a delivery information field 312, a delivery address field 314, a payment information field 316, and a summary field 318. The GUI 302 additionally includes an image 320 depicting an item of an item listing associated with the item request, and a confirmation button 322 used to communicate confirmation of the item request to the item request module 118. The various elements shown by the GUI 302 are intended as illustrative examples and are non-limiting.

The GUI 302 is operable to receive input from a user and communicate item request information to the item request module 118. In an example usage of the GUI 302, a user navigates an external computing device to the item listing 128 and initiates an item request for an item depicted by the item listing 128 using the GUI 302. The GUI 302 displays the identification of the provider of the item at the item provider identification field 304, as well as a description of the item at the item description field 306 and the price of the item at the price field 308. The user inputs the desired item procurement quantity of the item to the item procurement quantity field 310 (e.g., an amount of the item to be requested). In some implementations, the user inputs a selection of a delivery service (e.g., postal service) to be used for delivery of the item at the delivery information field 312 and a delivery address at the delivery address field 314. In some implementations, the user further inputs payment information (e.g., credit card information) to be used for processing of the item request to the payment information field 316.

The GUI 302 displays a summary of the item request information at the summary field 318. The user confirms the item request for the procurement quantity of the item by interacting with the confirmation button 322 (e.g., selecting or applying a confirmation input to the confirmation button 322). Responsive to confirming the item request, the item request module 118 communicates the item request data 114 describing the item request to the secure hash module 110. The secure hash module 110 receives the item request data 114 from the item request module 118 and generates a secure hash representing the item request data 114 as described above. In some implementations, the secure hash module 110 stores the secure hash via a secure hash ring. The secure hash is encoded via a secure hash algorithm as described further below.

The secure hash module 110 supports receiving a high amount of item requests concurrently, and generating and storing secure hashes from the item requests at a high speed. As one non-limiting example, generating and storing a secure hash via the secure hash module 110 may occur within approximately sixteen microseconds, such that the secure hash module 110 supports generating and storing approximately sixty-thousand secure hashes per second. This high speed of generating and storing secure hashes using item request data supports an ability of the service provider system 102 to receive large amounts of item requests (e.g., tens of thousands of item requests, hundreds of thousands of item requests, etc.) for a listed item within a short amount of time without performance degradation of the service provider system 102 (e.g., without unintended shutdowns, latency, communication disruptions, or other undesired operation).

Following the generation of the secure hash, the secure hash module 110 communicates updated item availability data 324 to the item request module 118. The updated item availability data 324 is based on the secure hash generated by the secure hash module 110. In particular, the secure hashes generated by the secure hash module 110 are based on the item request data 114, and the item request data 114 specifies the item procurement quantity 122. The updated item availability data 324 is based on an original item availability quantity specified by the item listing that has been decremented (e.g., reduced) according to the item procurement quantity 122 during generation of the secure hash.

The item request module 118 uses the updated item availability data 324 to adjust the item availability described by the item listing (e.g., the number of instances of the item available as displayed by an availability indicator 326). Thus, decrementing the available item quantity displayed by the availability indicator 326 is performed responsive to generating each secure hash, where the decrementing includes reducing the available item quantity by the respective item procurement quantity associated with each secure hash (and each secure hash is associated with a respective recipient such that the item quantity is decremented for each recipient).

In some implementations, the decrementing of the available item quantity occurs at a speed approximately equal to the speed of generating and storing the secure hashes as described above. Thus, for a given item request of an item described by an item listing, generating the secure hash from the item request data, storing the secure hash, and decrementing the available item quantity described by the item listing may occur together within approximately thirty-two microseconds immediately following confirmation of the item request by the user (e.g., user input applied to the confirmation button 322). This supports a higher rate of placement of item requests without performance degradation of the service provider system 102 as compared to conventional approaches.

For example, with the generating and storing of the secure hash and the decrementing of the available item quantity each occurring within a duration of thirty-two microseconds for each item request, the item request management system 116 supports an item request placement rate of approximately thirty-one thousand item requests per second. The above-described example is non-limiting, and the item request management system 116 can support higher item request placement rates (e.g., approximately sixty-four thousand item requests per second).

The secure hashes are provided to the item request processing module 120 as the secure hash data 130. In some implementations, the secure hash data 130 includes multiple secure hashes stored by the secure hash module 110 (e.g., multiple secure hashes are provided concurrently to the item request processing module 120 via communication of the secure hash data 130). In other implementations, the secure hash module 110 provides the secure hashes to the item request processing module 120 individually (e.g., each instance of the secure hash data 130 describes one respective secure hash).

The secure hashes stored by the secure hash module 110 can be consumed (e.g., processed) by the item request processing module 120 a rate lower than the item request placement rate, as described above with reference to FIG. 2. In some implementations, the rate of providing the secure hashes to the item request processing module 120 is automatically selected (e.g., without human input or other human intervention) from a range of rates based on a detected computational load of the service provider system 102. For example, during conditions in which the computational load on the service provider system 102 is higher, the rate of providing the secure hashes to the item request processing module 120 may be automatically selected to be lower compared to conditions in which the computational load on the service provider system 102 is lower. By automatically adjusting the rate at which the secure hashes are provided to the item request processing module 120, the item request management system 116 reduces the likelihood of performance degradation of the service provider system 102 that could otherwise result from attempting to process item requests via the item request processing module 120 at a rate unsupported by the computational capacity of the service provider system 102.

The item request processing module 120 receives the secure hash data 130 and processes the secure hash data 130 to generate processed item request data 328. The item request processing module 120 is configured to process the secure hash data 130 to identify an item request corresponding to the secure hash data 130.

As an example, item request data including the user identification 124, the item identification 126, and the item procurement quantity 122 is provided to the secure hash module 110, and the secure hash module 110 generates and stores the secure hash data 130 based on the item request data 114. The secure hash data 130 is generated from the information included by the item request data 114 using a secure hash algorithm 330 of an encoding module 332 of the secure hash module 110. In some implementations, the secure hash data 130, once generated, is appended to the item request data 114 (or otherwise included by the item request data 114) by the secure hash module 110 such that the secure hash data 130 can be compared to the item request data 114 to determine the item request associated with the secure hash data 130.

In an example scenario, a flash offering associated with an item listing occurs, and a plurality of item requests for the item are facilitated by the item request module 118. Each item request is associated with corresponding item request data that is provided to the secure hash module 110. The secure hash module 110 generates secure hash data for each item request. The secure hash data for a given item request is appended by the secure hash module 110 to the item request data for that item request, and the secure hash data is maintained in the secure hash ring associated with the item listing. As described above, the secure hash ring includes a plurality of nodes, where the nodes represent item request data associated with item requests. The secure hash ring may thus define a sequence of the item requests based on a sequence of the nodes.

In order to process the item requests, the secure hash data is provided to the item request processing module 120. In some implementations, the item request processing module 120 processes item requests according to the sequence defined by the secure hash ring. To do so, the item request processing module 120 compares a given instance of secure hash data (e.g., a single secure hash, such as a first secure hash in the sequence defined by the secure hash ring) to the secure hashes appended to the item request data. Using the example depicted by FIG. 3, the item request processing module 120 may search the item request data 114 for the secure hash "S87KUS6297CF2319JLFM7E26HA62M30PWE11CVVN78" to identify which instance of item request data has been appended to include this secure hash. Once the secure hash has been matched to the respective item request data, the item request processing module 120 generates a queued item request 334 using the matched item request data to place the item request in the processing queue. The above-described process may be repeated for each instance of item request data and each corresponding secure hash in order to generate a plurality of queued item requests in the processing queue 204.

The item request processing module 120 processes the queued item request 334 and generates the processed item request data 328. Once processed, the queued item request 334 is removed from the processing queue 204. The processed item request data 328 may include an indicator describing that the queued item request 334 associated with the processed item request data 328 has been full processed. The processed item request data 328 may additionally include information that is used to support downstream operations involving the item request. For example, the processed item request data 328 may include information describing payment details associated with the item request (e.g., information input to the payment information field 316), item delivery details associated with the item request (e.g., information input to the delivery information field 312 and/or the delivery address field 314), etc.

In the implementation shown, the processed item request data 328 is communicated to a delivery module 336. The delivery module 336 is operable to facilitate delivery of an item 338 to a recipient 340 based on the information included in the processed item request data 328, where the item 338 is described by the item listing associated with the item request data 114. The item 338 depicted by FIG. 3 is representative of a quantity of instances of the item described by the item listing equal to the procurement quantity specified by the item request data 114 associated with the item request. For example, in a situation in which the item request data specifies that the procurement quantity is three, the delivery module 336 is employed to allocate three instances of the item to the recipient 340 (e.g., facilitate delivery of the three instances of the item to the recipient 340).

In some implementations, the delivery module 336 is integrated with the service provider system 102. In alternative implementations, the delivery module 336 is separate from (e.g., external to) the service provider system 102. For example, the delivery module 336 may be implemented by an external computing device associated with a delivery service provider, such as a postal service.

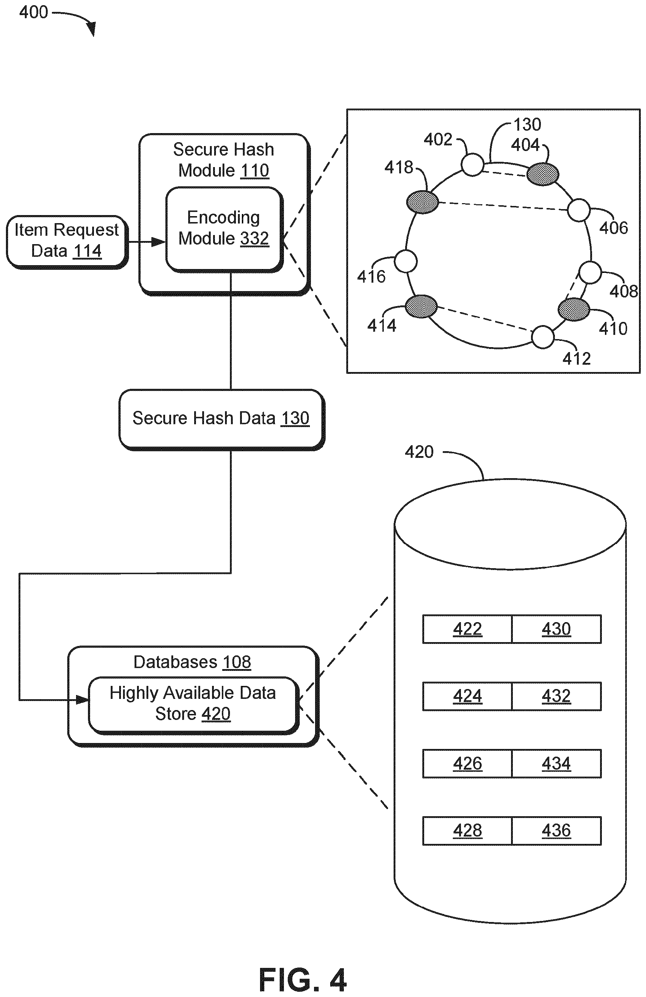

FIG. 4 depicts an example 400 showing the secure hash ring 132 maintained by the secure hash module 110. The secure hash ring 132 is generated using the encoding module 332 of the secure hash module 110. As described above, the secure hash ring 132 is associated with a single item listing implemented by the platform 104. However, the secure hash module 110 is configured to maintain multiple secure hash rings, with each secure hash ring associated with a different item listing. For example, in a scenario in which multiple concurrent flash offerings occur for different item listings implemented by the platform 104, the secure hash module 110 may generate and separately maintain respective secure hash rings for each of the item listings.

The encoding module 332 generates each node of the secure hash ring 132, where the nodes represent item request data associated with item requests for an item depicted by the item listing. In the example shown, the secure hash ring 132 includes a node 402, a node 404, a node 406, a node 408, a node 410, a node 412, a node 414, a node 416, and a node 418. In some implementations, each node is generated from an entirety of the item request data associated with an item request. For example, a single node may be generated from information including each of the user identification 124, the item identification 126, and the item procurement quantity 122.

In alternative implementations, multiple nodes may represent item request data associated with a single item request. For example, a first node may be generated from information describing the item procurement quantity specified by the item request data of the item request, and a second node may be generated from information describing the user identification and item identification for the item request.

In the configuration shown by FIG. 4, the nodes representing information describing the user identification and item identification are illustrated with shading, while the nodes representing information describing item procurement amounts are illustrated without shading. In some implementations, the nodes illustrated with shading are based on additional information describing parameters of the item request, such as a selected size of the requested item, a selected color of the requested item, etc.

The nodes in the implementation shown by FIG. 4 form pairs, with each pair including a node generated from the item procurement quantity and a node generated from the other information associated with the item request such as the user identification and item identification. Nodes of a pair are indicated with dashed lines extending between the nodes in FIG. 4. For example, the node 402 is shown paired with the node 404, the node 418 is shown paired with the node 406, the node 410 is shown paired with the node 408, and the node 414 is shown paired with the node 412. In this example, the paired nodes together represent item requests placed using the GUI 302 described above (e.g., the nodes 402 and 404 together represent a first item request, the nodes 418 and 406 together represent a second item request, etc.). In some implementations, a node of a pair of nodes represents the recipient associated with an item request, and another node of the pair of nodes represents the item and the item procurement quantity associated with the item request.

In the implementation shown, the encoding module 332 communicates the secure hash data 130 to the databases 108, with the secure hash data 130 stored by the databases 108. FIG. 4 shows an example representation of the secure hash data 130 during conditions in which the secure hash data 130 is stored to the databases 108. In particular, a highly available data store 420 of the databases 108 stores the secure hash data 130, with partitions of the highly available data store 420 representing the nodes of the secure hash ring 132. The highly available data store 420 is shown including a first partition 422, a second partition 424, a third partition 426, and a fourth partition 428, which represent the node 406, the node 408, the node 412, and the node 402, respectively. The highly available data store 420 is shown additionally including a first counter data 430, a second counter data 432, a third counter data 434, and a fourth counter data 436, which represent the item procurement quantities associated with the node 406, the node 408, the node 412, and the node 402, respectively.

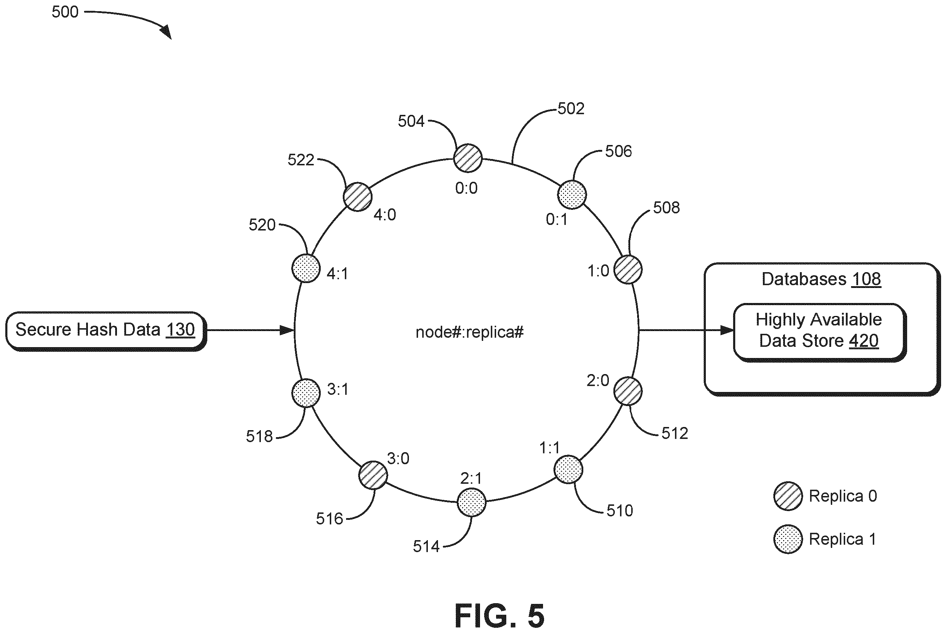

FIG. 5 depicts an example 500 showing selection of a shard number associated with the secure hash data 130. In the implementation shown, different replicas of nodes of a secure hash ring 502 are indicated with different shading. In particular, "replica 0" nodes are indicated with diagonal hatch shading, and "replica 1" nodes are indicated with stipple shading. The replicas are instances of node data that are included for balanced distribution of the node data among the shards (e.g., partitions of the highly available data store 420). For example, the replicas may reduce a likelihood of one or more shards of the highly available data store 420 being associated with more nodes of the secure hash ring 502 than other shards of the highly available data store 420.

In this example, five pairs of node replicas are shown. Specifically, a replica 504 and a replica 506 are replicas of a first node ("node 0"), a replica 508 and a replica 510 are replicas of a second node ("node 1"), a replica 512 and a replica 514 are replicas of a third node ("node 2"), a replica 516 and a replica 518 are replicas of a fourth node ("node 3"), and a replica 520 and a replica 522 are replicas of a fifth node ("node 4"). The numbers next to the replicas indicate the nodes with which the replicas are associated and are in an "a:b" format, where "a" is the node number associated with the replica, and "b" is the number of the replica.

In an example scenario of representing the secure hash data 130 in the secure hash ring 502 as a node of the secure hash ring 502, two replicas of the node may be generated and included in the secure hash ring 502. For example, a first replica ("replica 0") with the label "5:0" and a second replica ("replica 1") with the label "5:1" may each be added to the secure hash ring 502 at a location between the replica 522 and the replica 504. The secure hash data 130 may thus be associated with a corresponding shard in the highly available data store 420. As each secure hash may be associated with a different shard, and each secure hash is associated with a respective recipient described by item request data used to generate the secure hash, each recipient may be considered as assigned to a respective shard of the sharded random hash ring via the secure hashes.

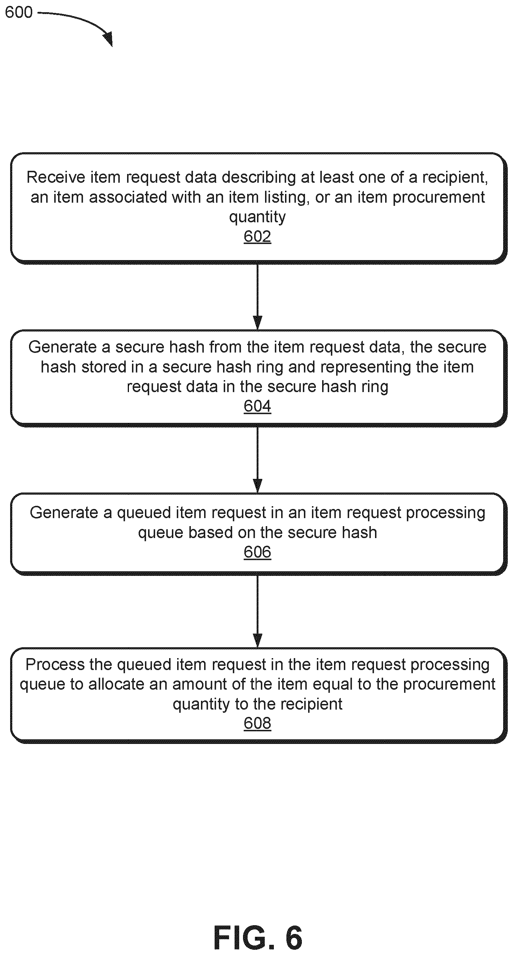

FIG. 6 shows a flow diagram depicting a procedure 600 in an example implementation which includes using a secure hash for item request management.

Item request data describing at least one of a recipient, an item associated with an item listing, or an item procurement quantity is received (block 602). In accordance with the described techniques, the item request data is associated with an item request for an item described by an item listing. By way of example, the item request data 114 including the user identification 124, the item identification 126, and the item procurement quantity 122 is communicated over the network 106 to the service provider system 102.

A secure hash is generated from the item request data, the secure hash stored in a secure hash ring and representing the item request data in the secure hash ring (block 604). By way of example, the secure hash module 110 generates the secure hash data 130 from the item request data 114.

A queued item request is generated in an item request processing queue based on the secure hash (block 606). By way of example, the secure hash data 130 is used to generate the queued item request 334 based on the item request data 114.

The queued item request in the item request processing queue is processed to allocate an amount of the item equal to the procurement quantity to the recipient (block 608). By way of example, the queued item request 334 is processed to generate the processed order data 328 which is provided to the delivery module 336 to facilitate delivery of the item 338 to the recipient 340.

Having described examples of procedures in accordance with one or more implementations, consider now an example of a system and device that can be utilized to implement the various techniques described herein.

### Example System and Device

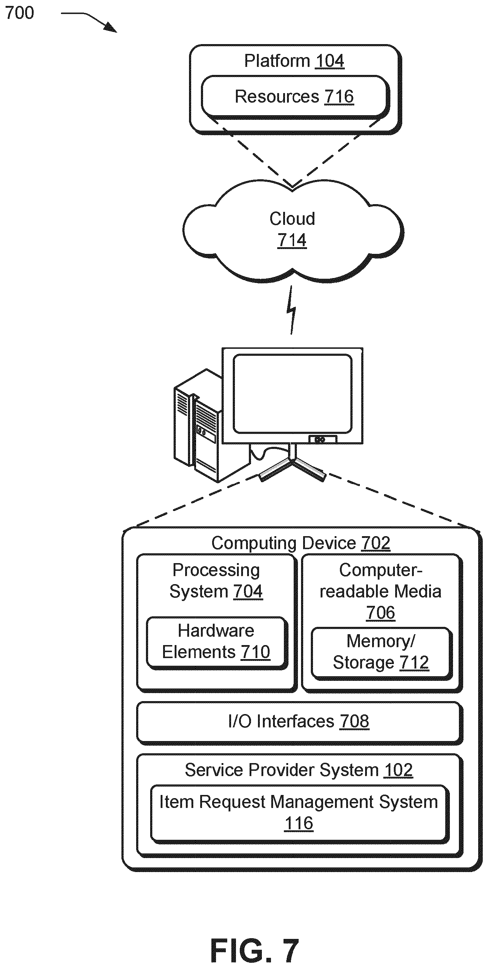

Referring to FIG. 7, an example system 700 is depicted that includes an example computing device that is representative of one or more computing systems and/or devices that are usable to implement the various techniques described herein.

This is illustrated through inclusion of the service provider system 102 implementing the item request management system 116. Computing device 702 includes, for example, a server of the service provider system 102, a device associated with a client (e.g., a client device), an on-chip system, and/or any other suitable computing device or computing system.

The example computing device 702 as illustrated includes a processing system 704, one or more computer-readable media 706, and one or more input/output interfaces 708 (I/O interfaces) that are communicatively coupled, one to another. Although not shown, the computing device 702 further includes a system bus or other data and command transfer system that couples the various components, one to another. For example, a system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 704 is representative of functionality to perform one or more operations using hardware. Accordingly, the processing system 704 is illustrated as including hardware elements 710 that are configured as processors, functional blocks, and so forth. This includes example implementations in hardware as a system specific integrated circuit or other logic device formed using one or more semiconductors. The hardware elements 710 are not limited by the materials from which they are formed or the processing mechanisms employed therein. For example, processors are comprised of semiconductor(s) and/or transistors (e.g., electronic integrated circuits (ICs)). In such a context, processor-executable instructions are, for example, electronically-executable instructions.

The computer-readable media 706 is illustrated as including memory/storage 712. The memory/storage 712 represents memory/storage capacity associated with one or more computer-readable media. In one example, the memory/storage 712 includes volatile media (such as random access memory (RAM)) and/or nonvolatile media (such as read only memory (ROM), Flash memory, optical disks, magnetic disks, and so forth). In another example, the memory/storage 712 includes fixed media (e.g., RAM, ROM, a fixed hard drive, and so on) as well as removable media (e.g., Flash memory, a removable hard drive, an optical disc, and so forth). The computer-readable media 706 is configurable in a variety of other ways as further described below.

The input/output interface(s) 708 are representative of functionality to allow user input to enter commands and information to the computing device 702, and also allow information to be presented and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which employs visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 702 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques are implementable on a variety of commercial computing platforms having a variety of processors.

Implementations of the described modules and techniques are storable on or transmitted across some form of computer-readable media. For example, the computer-readable media includes a variety of media that is accessible to the service provider system 102. By way of example, and not limitation, computer-readable media includes "computer-readable storage media" and "computer-readable signal media."

"Computer-readable storage media" refers to media and/or devices that enable persistent and/or non-transitory storage of information in contrast to mere signal transmission, carrier waves, or signals per se. Thus, computer-readable storage media refers to non-signal bearing media. The one-or-more computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which are accessible to a computer.

"Computer-readable signal media" refers to a signal-bearing medium that is configured to transmit instructions to the hardware of the computing device 702, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, the hardware elements 710 and the computer-readable media 706 are representative of modules, programmable device logic and/or fixed device logic implemented in a hardware form that is employable in some implementations to implement at least some aspects of the techniques described herein, such as to perform one or more instructions. Hardware includes components of an integrated circuit or on-chip system, a system-specific integrated circuit (ASIC), a field-programmable gate array (FPGA), a complex programmable logic device (CPLD), and other implementations in silicon or other hardware. In this context, hardware operates as a computing device that performs program tasks defined by instructions and/or logic embodied by the hardware as well as a hardware utilized to store instructions for execution, e.g., the computer-readable storage media described previously.

Combinations of the foregoing are also employable to implement various techniques described herein. Accordingly, software, hardware, or executable modules are implementable as one or more instructions and/or logic embodied on some form of computer-readable storage media and/or by one or more of the hardware elements 710. For example, the computing device 702 is configured to implement particular instructions and/or functions corresponding to the software and/or hardware modules. Accordingly, implementation of a module that is executable by the computing device 702 as software is achieved at least partially in hardware, e.g., through use of computer-readable storage media and/or the hardware elements 710 of the processing system 704. The instructions and/or functions are executable/operable by one or more articles of manufacture (for example, one or more computing devices such as computing device 702 and/or processing systems such as processing system 704) to implement techniques, modules, and examples described herein.

The techniques described herein are supportable by various configurations of the computing device 702 and are not limited to the specific examples of the techniques described herein. This functionality is also implementable entirely or partially through use of a distributed system, such as over a "cloud" 714 as described below.

The cloud 714 includes and/or is representative of the platform 104 for resources 716. The platform 104 abstracts underlying functionality of hardware (e.g., servers) and software resources of the cloud 714. For example, the resources 716 include systems and/or data that are utilized while computer processing is executed on servers that are remote from the computing device 702. In some examples, the resources 716 also include services provided over the Internet and/or through a subscriber network, such as a cellular or Wi-Fi network.

The platform 104 abstracts the resources 716 and functions to connect the computing device 702 with other computing devices. In some examples, the platform 104 also serves to abstract scaling of resources to provide a corresponding level of scale to encountered demand for the resources that are implemented via the platform 104. Accordingly, in an interconnected device implementation, implementation of functionality described herein is distributable throughout the system 700. For example, the functionality is implementable in part on the computing device 702 as well as via the platform 104 that abstracts the functionality of the cloud 714.

In some aspects, the techniques described herein relate to a method, including: receiving, by a computing device of a service provider system, item request data describing at least one of a recipient, an item associated with an item listing, or an item procurement quantity; generating, by the computing device of the service provider system, a secure hash from the item request data, the secure hash stored in a secure hash ring and representing the item request data in the secure hash ring; generating, by the computing device of the service provider system, a queued item request in an item request processing queue based on the secure hash; and processing, by the computing device of the service provider system, the queued item request in the item request processing queue to allocate an amount of the item equal to the procurement quantity to the recipient.

In some aspects, the techniques described herein relate to a method, further including: determining, by the computing device of the service provider system, network traffic associated with the item listing, the item listing implemented by a platform of the service provider system; and forming, by the computing device of the service provider system, the secure hash ring responsive to the network traffic.

In some aspects, the techniques described herein relate to a method, wherein determining the network traffic is performed using a count-min sketch probabilistic data structure.

In some aspects, the techniques described herein relate to a method, further including comparing the network traffic to a threshold traffic amount, and the forming of the secure hash ring occurs responsive to the determined network traffic being greater than the threshold traffic amount.

In some aspects, the techniques described herein relate to a method, further including controlling a processing delay associated with the item request processing queue based on the network traffic.

In some aspects, the techniques described herein relate to a method, further including controlling a processing delay associated with the item request processing queue based on a size of the hash ring.

In some aspects, the techniques described herein relate to a method, further including adjusting an available quantity of the item in the item listing based on the secure hash.

In some aspects, the techniques described herein relate to a method, wherein the secure hash is encoded via a cryptographic hash algorithm.

In some aspects, the techniques described herein relate to a method, further including: controlling, by the computing device of the service provider system, a speed of the processing of the queued item request, the speed of the processing being different than a speed of generating the secure hash from the item request data.

In some aspects, the techniques described herein relate to a method, wherein the secure hash represents the item request data in the secure hash ring as a pair of nodes.

In some aspects, the techniques described herein relate to a method, wherein the item request data describes each of the recipient, the item associated with the item listing, and the item procurement quantity, a node of the pair of nodes represents the recipient, and another node of the pair of nodes represents the item and the item procurement quantity.

In some aspects, the techniques described herein relate to a system, including: one or more computing devices; and one or more computer-readable storage media storing instructions which, when executed by the one or more computing devices, cause the one or more computing devices to perform operations including: receiving item request data describing a plurality of recipients, an item associated with an item listing, and item procurement quantities including a respective item procurement quantity for each recipient of the plurality of the recipients; generating a plurality of secure hashes from the item request data, the secure hashes stored in a secure hash ring and representing the plurality of recipients and the item procurement quantities in the secure hash ring; generating queued item requests in an item request processing queue from each of the secure hashes; and processing the queued item requests in the item request processing queue in a sequence of the secure hashes in the secure hash ring to allocate an amount of the item to each recipient of the plurality of recipients, where the amount of the item for each recipient is equal to the respective procurement quantity for the recipient.

In some aspects, the techniques described herein relate to a system, wherein the secure hash ring is a sharded random hash ring.

In some aspects, the techniques described herein relate to a system, wherein each recipient of the plurality of recipients is assigned a respective shard of the sharded random hash ring.

In some aspects, the techniques described herein relate to a system, wherein the operations further include: decrementing an available item quantity specified by an indicator of a graphical user interface implemented by the one or more computing devices responsive to generating each secure hash of the plurality of secure hashes.

In some aspects, the techniques described herein relate to a system, wherein decrementing the available item quantity includes reducing the available item quantity by the respective item procurement quantity for each recipient of the plurality of the recipients.

In some aspects, the techniques described herein relate to one or more non-transitory computer-readable storage media including computer-readable instructions stored thereon that, responsive to execution by one or more processors, perform operations including: receiving item request data describing at least one of a recipient, an item associated with an item listing, or an item procurement quantity; generating a secure hash from the item request data, the secure hash stored in a secure hash ring and representing the item request data in the secure hash ring; generating a queued item request in an item request processing queue from the secure hash; and processing the queued item request in the item request processing queue to allocate an amount of the item equal to the procurement quantity to the recipient.

In some aspects, the techniques described herein relate to one or more non-transitory computer-readable storage media, wherein the operations further include adjusting an available quantity of the item in the item listing based on the secure hash.

In some aspects, the techniques described herein relate to one or more non-transitory computer-readable storage media, wherein the item request data describes each of the recipient, the item associated with the item listing, and the item procurement quantity, and generating the secure hash from the item request data includes inputting the item request data to a cryptographic hash algorithm, where an output of the cryptographic hash algorithm is the secure hash.

In some aspects, the techniques described herein relate to one or more non-transitory computer-readable storage media, wherein the operations further include determining network traffic associated with the item listing and adjusting a timing of processing the queued item request in the item request processing queue based on the network traffic.

### Conclusion

Although the systems and techniques have been described in language specific to structural features and/or methodological acts, it is to be understood that the systems and techniques defined in the appended claims are not necessarily limited to the specific features or acts described. Rather, the specific features and acts are disclosed as example forms of implementing the claimed subject matter.

## Claims

1. A method, comprising:
receiving item request data describing at least one of a recipient, an item associated with an item listing, or an item procurement quantity;
generating a secure hash from the item request data, the secure hash stored in a secure hash ring and representing the item request data in the secure hash ring;
generating a queued item request in an item request processing queue based on the secure hash; and
processing the queued item request in the item request processing queue to allocate an amount of the item equal to the item procurement quantity to the recipient.

2. The method of claim **1,** further comprising:
determining network traffic associated with the item listing, the item listing implemented by a platform of a service provider system; and
forming the secure hash ring responsive to the network traffic.

3. The method of claim 2, wherein determining the network traffic is performed using a count-min sketch probabilistic data structure.

4. The method of claim 2 or 3, further comprising:
comparing the network traffic to a threshold traffic amount, and the forming of the secure hash ring occurs responsive to the determined network traffic being greater than the threshold traffic amount; and/or
controlling a processing delay associated with the item request processing queue based on the network traffic.

5. The method of any one of the preceding claims, further comprising controlling a processing delay associated with the item request processing queue based on a size of the secure hash ring.

6. The method of any one of the preceding claims, further comprising adjusting an available quantity of the item in the item listing based on the secure hash;
wherein the secure hash may be encoded via a cryptographic hash algorithm.

7. The method of any one of the preceding claims, further comprising controlling a speed of the processing of the queued item request, the speed of the processing being different than a speed of generating the secure hash from the item request data.

8. The method of any one of the preceding claims, wherein the secure hash represents the item request data in the secure hash ring as a pair of nodes.

9. The method of claim 8, wherein:
the item request data describes each of the recipient, the item associated with the item listing, and the item procurement quantity;
a node of the pair of nodes represents the recipient; and
another node of the pair of nodes represents the item and the item procurement quantity.

10. A system, comprising:
one or more computing devices; and
one or more computer-readable storage media storing instructions which, when executed by the one or more computing devices, cause the one or more computing devices to perform operations comprising:
receiving item request data describing a plurality of recipients, an item associated with an item listing, and item procurement quantities including a respective item procurement quantity for each recipient of the plurality of recipients;
generating a plurality of secure hashes from the item request data, the plurality of secure hashes stored in a secure hash ring and representing the plurality of recipients and the item procurement quantities in the secure hash ring;
generating queued item requests in an item request processing queue from the plurality of secure hashes; and
processing the queued item requests in the item request processing queue in a sequence of the plurality of secure hashes in the secure hash ring to allocate an amount of the item to each recipient of the plurality of recipients, where the amount of the item for each recipient is equal to the respective procurement quantity for the recipient.

11. The system of claim 10, wherein the secure hash ring is a sharded random hash ring;
wherein each recipient of the plurality of recipients may be assigned a respective shard of the sharded random hash ring.

12. The system of claim 10 or 11, wherein the operations further comprise decrementing an available item quantity specified by an indicator of a graphical user interface implemented by the one or more computing devices responsive to generating each secure hash of the plurality of secure hashes;
wherein decrementing the available item quantity may include reducing the available item quantity by the respective item procurement quantity for each recipient of the plurality of recipients.

13. One or more transitory or non-transitory computer-readable storage media comprising computer-readable instructions stored thereon that, responsive to execution by one or more processors, perform operations comprising:
receiving item request data describing at least one of a recipient, an item associated with an item listing, or an item procurement quantity;
generating a secure hash from the item request data, the secure hash stored in a secure hash ring and representing the item request data in the secure hash ring;
generating a queued item request in an item request processing queue from the secure hash; and
processing the queued item request in the item request processing queue to allocate an amount of the item equal to the item procurement quantity to the recipient.

14. The one or more transitory or non-transitory computer-readable storage media of claim 13, wherein the operations further comprise:
adjusting an available quantity of the item in the item listing based on the secure hash; and/or
determining network traffic associated with the item listing and adjusting a timing of processing the queued item request in the item request processing queue based on the network traffic.

15. The one or more transitory or non-transitory computer-readable storage media of claim 13 or 14, wherein:
the item request data describes each of the recipient, the item associated with the item listing, and the item procurement quantity;
generating the secure hash from the item request data includes inputting the item request data to a cryptographic hash algorithm; and
an output of the cryptographic hash algorithm is the secure hash.
